# EUROPÄISCHE PATENTSCHRIFT

(11) **EP 0 287 873 B1**
(45) Veröffentlichungstag und Bekanntmachung des Hinweises auf die Patenterteilung: **29.09.1993**
(21) Anmeldenummer: 88105238.5
(22) Anmeldetag: 31.03.1988
(51) Int. Cl.: G01N 27/72

(54) **Messverfahren zur Messung und genauen Lokalisierung von Zugeigenspannungen in gehärteten Bereichen von Bauteilen**
Process for measuring and exactly localizing the strain in hardened areas of structural elements
Procédé pour mesurer et localiser avec précision des forces élastiques dans des domaines trempés d'éléments de construction

(30) Priorität: 16.04.1987 DE 3713062
(43) Veröffentlichungstag der Anmeldung: 26.10.1988
(73) Patentinhaber: SIEMENS AKTIENGESELLSCHAFT, 80333 München (DE)
(72) Erfinder: Stücker, Erwin, D-4300 Essen/Frintrop (DE); Koch, Dietmar, D-4330 Mülheim/Ruhr (DE); Hofer, Gerhard, Dr., D-8551 Röttenbach (DE); Guenes, Uenal, D-8520 Erlangen (DE)

(56) Entgegenhaltungen:
- EP-A- 0 100 009
- DE-A- 2 837 733
- FR-A- 2 158 994
- US-A- 3 697 866

## Beschreibung

Die vorliegende Erfindung betrifft ein Verfahren zur Messung von Eigenspannungen nach dem Oberbegriff des Anspruchs 1 sowie eine Vorrichtung zur Durchführung dieses Verfahrens gemäß dem Oberbegriff des Anspruchs 4.

Aus der DE-A-28 37 733, der DE-A-30 37 932 und der EP-A-0100 009 sind bereits Meßverfahren zur Feststellung von Werkstoffzuständen bekannt, die den Barkhausen-Effekt ausnutzen, bzw. eine Bestimmung der Koerzitivfeldstärke ermöglichen. In der DE-A-2 247 634 ist auch die Anwendung dieser Messungen zur Qualitätskontrolle weicher unlegierter Stähle bekannt.

Ein entsprechendes Meßgerät wurde von der Fraunhofer Gesellschaft zur Förderung der angewandten Forschung e. V. entwickelt. Dieses Gerät, ein sogenannter "EMAG-Analysator", eignet sich beispielsweise für die für die vorliegende Erfindung nötigen Messungen. In der Bedienungsanleitung dieses Gerätes "EMAG-Analysator E2302 S8200" ist das Meßprinzip ausführlich beschrieben. Auch in den beiden obengenannten Patentanmeldungsbeschreibungen, auf die hier ausdrücklich Bezug genommen wird, sind die Grundzüge der notwendigen Messungen beschrieben.

Nach dem Stand der Technik lassen sich durch Messung der magnetischen Barkhausen-Rauschamplitude qualitative Aussagen über mechanische Spannungen in einem Bauteil gewinnen und aufgrund der Messung der Koerzitivfeldstärke qualitative Aussagen über die Härte. Bei Werkstücken mit besonders gehärteten Bereichen, wie z. B. Turbinenschaufeln mit gehärteten Eintrittskanten, genügen solche qualitativen Aussagen für eine sicherheitstechnische Betrachtung im allgemeinen nicht. Dies liegt daran, daß sowohl die Härte wie auch die mechanische Spannung des zu untersuchenden Bereiches beide obengenannten Meßwerte beeinflussen. Da andererseits die Härte eines zu untersuchenden Bereiches im allgemeinen weder genau bekannt noch über den gesamten Bereich konstant ist, lassen sich nach herkömmlichen Meßverfahren keine quantitativen Aussagen über vorhandene mechanische Spannungen und ihre Verteilung an einem Bauteil machen.

Da jedoch andererseits das Vorhandensein von Zugeigenspannungen bei hochbelasteten Bauteilen, wie z. B. Turbinenschaufeln, eine spätere Bildung von Rissen begünstigen kann, sind sehr genaue quantitative Messungen nötig, um Bauteile nach der Herstellung bzw. bei Wiederholungsprüfungen zu qualifizieren.

Aufgabe der Erfindung ist daher ein Meßverfahren, welches eine quantitative Messung von Eigenspannungen ermöglicht und somit die genaue Lokalisierung von insbesondere Zugeigenspannungen zuläßt. Orte mit hohen Zugeigenspannungen oder bereits im Entstehen begriffenen Rissen sollen zuverlässig erkannt werden.

Aufgabe der Erfindung ist ferner eine entsprechende Vorrichtung zur Durchführung des Verfahrens.

Zur Lösung dieser Aufgabe wird ein Verfahren mit den kennzeichnenden Merkmalen des Anspruchs 1 vorgeschlagen. Die Erfindung geht dabei von der Erkenntnis aus, daß die Abhängigkeit der Koerzitivfeldstärke und des Barkhausen-Rauschens von der mechanischen Spannung und der Härte grundsätzlich durch geeignete Kalibrierproben für jeden Werkstoff ermittelt werden kann. Es ergibt sich dann ein in Kurvenscharen, Diagrammen oder als Funktion darstellbarer Zusammenhang zwischen diesen Größen. Es hat sich nun gezeigt, daß bei Kenntnis dieses Zusammenhanges aus der Messung der Koerzitivfeldstärke und der magnetischen Barkhausen-Rauschamplitude sowohl jeweils die örtliche Härte wie auch die dort vorhandene mechanische Spannung ermittelt werden kann. Dies ermöglicht exakte quantitative Aussagen, insbesondere über die in einem Bauteil vorhandenen Eigenspannungen, unabhängig von der örtlich vorhandenen Härte.

Gemäß Anspruch 2 läßt sich ein solches Verfahren besonders vorteilhaft für die Prüfung der gehärteten Anströmkanten von Turbinenschaufeln, insbesondere von Niederdruck-Turbinenschaufeln, anwenden. Diese hochbelasteten Bauteile werden regelmäßig überprüft, wobei mit dem erfindungsgemäßen Meßverfahren gefährdete Schaufeln frühzeitig erkannt werden können. Nach dem Stand der Technik hätten gefährdete Bereiche zwar möglicherweise anhand eines Maximums der Barkhausen-Rauschamplitude erkannt werden können, jedoch wäre eine Aussage über die absolute Größe der Zugeigenspannungen wegen des bisher nicht eliminierbaren Einflusses der veränderlichen Härte kaum möglich gewesen. Bei der erfindungsgemäßen Messung der tatsächlichen mechanischen Spannungen lassen sich hingegen Absolutwerte bestimmen, wodurch beispielsweise auch gefährdete Bereiche ausgemacht werden können, die durch gegenläufiges Verhalten von Härte und Zugeigenspannung nach dem Stand der Technik nur eine unauffällige Barkhausen-Rauschamplitude gezeigt hätten.

Versuche haben ferner gezeigt, daß in Bereichen, in denen Zugeigenspannungen bereits zu kleinen Rissen geführt haben, sich typische Doppelmaxima der gemessenen mechanischen Spannungen ergeben, wenn man mit einem Meßsystem über einen solchen Bereich hinwegfährt.

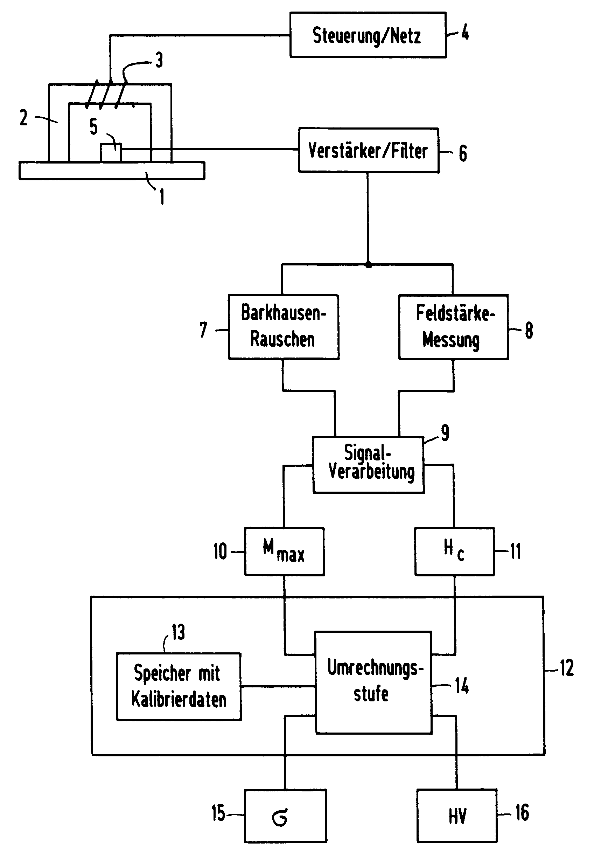

Um eine systematische Untersuchung der örtlichen Verteilung von mechanischen Spannungen zu ermöglichen, ist es gemäß Anspruch 3 besonders vorteilhaft, daß ein Erreger- und Meßaufnehmersystem mit definierter, vorzugsweise konstanter Geschwindigkeit über eine definierte Meßspur im zu untersuchenden Bereich geführt wird, wobei in schneller Folge Messungen durchgeführt werden. Die zeitliche Reihenfolge der Meßwerte ermöglicht anhand der bekannten Geschwindigkeit die örtliche Zuordnung. Ein solches Verfahren eignet sich insbesondere, um die gehärtete Kante einer Turbinenschaufel zu untersuchen.
Entsprechende Vorrichtungen zur Durchführung des Verfahrens sind in den Ansprüchen 4 bis 7 angegeben. Wie anhand der Zeichnung näher erläutert wird, muß eine erfindungsgemäße Vorrichtung einen Speicher mit Kalibrierdaten und eine Umrechnungsstufe enthalten, um aus den beiden nicht unabhängigen Meßwerten Koerzitivfeldstärke und Barkhausen-Rauschamplitude die beiden unabhängigen Materialeigenschaften, Härte und mechanische Spannung zu ermitteln. Die Verarbeitung der Meßwerte sollte vorzugsweise on-line erfolgen, um die Prüfzeiten an Bauteilen zu verkürzen. Um größere Bereiche, beispielsweise die Kanten von Niederdruck-Turbinenschaufeln zu untersuchen, muß ein Erreger- und Meßaufnehmersystem entlang des zu untersuchenden Bereiches bewegt werden, vorzugsweise mit konstanter Geschwindigkeit, was durch einen mechanischen Antrieb oder einen geeigneten Manipulator erreicht werden kann. Bei der Anströmkante einer Turbinenschaufel kann ein solcher Manipulator beispielsweise auf der zu untersuchenden Kante "reiten". Bei anderen zu untersuchenden Bauteilen ist es auch denkbar, daß das Erregersystem, welches im wesentlichen aus einem Magnetjoch mit Magnetspule besteht, fest an dem Bauteil durch seine magnetische Wirkung angeheftet wird, wobei dann das Meßaufnehmersystem von dem Erregersystem getragen und innerhalb der beiden Pole bewegt werden kann.

Ein Ausführungsbeispiel der erfindungsgemäßen Vorrichtung ist schematisch in der Zeichnung dargestellt. Das Meßprinzip bis zum Vorliegen der Meßwerte für die Koerzitivfeldstärke und die max. Barkhausen-Rauschamplitude ist dabei Stand der Technik.

Ein zu untersuchendes Bauteil 1 wird mittels eines Erregersystems 2, 3, 4 mit einem magnetischen Wechselfeld magnetisiert. Das Erregersystem besteht aus einem Magnetjoch 2, einer Magnetspule 3 und der zugehörigen Stromversorgung bzw. Steuerung 4. Ein Meßaufnehmer 5 enthält die üblichen Einrichtungen zur Messung des Barkhausen-Rauschens und der Koerzitivfeldstärke, d. h. beispielsweise einen magnetinduktiven Aufnehmer und eine Hallsonde. Die Meßsignale werden nach Verstärkung bzw. Filterung 6 getrennt für das Barkhausen-Rauschen 7 und die Koerzitivfeldstärke 8 einer Signalverarbeitung zugeführt, an welche sich die Signalausgabe 10, 11 für die Barkhausen-Rauschamplitude Mₘₐₓ und die Koerzitivfeldstärke H_{c} anschließt. Diese beiden Meßwerte sind dabei jeder für sich sowohl von der Härte wie auch von den mechanischen Spannungen des untersuchten Bauteiles abhängig. Um eindeutige Aussagen über die Materialeigenschaften zu erhalten, folgt daher eine weitere Auswerteelektronik 12, welche einen Speicher mit Kalibrierdaten 13 und eine Umrechnungsstufe 14 enthält. Durch Vergleich mit den materialspezifischen Kalibrierdaten bzw. durch Umrechnung mit entsprechenden Kalibrierfunktionen, welche die ermittelten Kalibrierdaten genügend genau annähern, können von der Auswerteelektronik 12 die beiden voneinander unabhängigen Materialeigenschaften Härte HV und mechanische Spannung Sigma ermittelt und in einer geeigneten Form gespeichert, angezeigt oder sonstwie sichtbar gemacht werden 15, 16. Im allgemeinen ist die Anzeige dieser Materialwerte auf einem Monitor in Abhängigkeit vom Weg, den der Meßaufnehmer zurückgelegt hat, besonders aussagekräftig und leicht überschaubar.

Durch das erfindungsgemäße Meßverfahren wird es insbesondere möglich, genaue Messungen von Zugeigenspannungen in gehärteten Bereichen mit nicht völlig konstanter Härte durchzuführen. Beispielsweise Turbinenschaufeln mit ungünstigen Materialeigenschaften können dadurch zuverlässig erkannt und ausgesondert werden.

## Patentansprüche

1. Verfahren zur Ermittlung von Eigenspannungen in einem gehärteten, zu untersuchenden Bereich eines Bauteils aus einem vorgegebenen Werkstoff, insbesondere bei einer Turbinenschaufel, **gekennzeichnet durch** folgende Merkmale:
a) An Kalibrierproben des vorgegebenen Werkstoffes, z. B. X20Cr13 oder X10CrNiMo V12 22, von jeweils bekannter Härte und bekannter Eigenspannung werden die Koerzitivfeldstärke (H_{c}) und die Amplitude des magnetischen Barkhausenrauschens (Mₘₐₓ) in Abhängigkeit von der mechanischen Spannung (Sigma) und der Härte (HV) gemessen,
b) Aus diesen ersten Meßwerten werden Kalibrierfunktionen erstellt, welche die Abhängigkeit der Koerzitivfeldstärke (H_{c}) und der Amplitude des magnetischen Barkhausenrauschens (Mₘₐₓ) als Funktionen von Härte (HV) und mechanischer Spannung (Sigma) angeben,
c) Über dem zu untersuchenden Bereich des Bauteiles werden die Koerzitivfeldstärken (H_{c}) und die Amplitude des magnetischen Barkhausenrauschens (Mₘₐₓ) ortsabhängig gemessen,
d) Diese zweiten Meßwerte (H_{c}, Mₘₐₓ ) der Koerzitivfeldstärke und der Amplitude des magnetischen Barkhausenrauschens in dem zu untersuchenden Bereich werden anhand der ermittelten Kalibrierfunktionen in ortsabhängige Härte (HV), z. B. Härte nach Vickers, und in ortsabhängige mechanische Spannung (Sigma) umgerechnet, wobei die so gewonnene ortsabhängige mechanische Spannung (Sigma) unabhängig von der ortsabhängigen Härte (HV) im zu untersuchenden Bereich vorliegt und für eine weitere Verarbeitung zur Verfügung steht, insbesondere für eine bildliche Darstellung der Spannungsverteilung oder eine Weiterverarbeitung in einem Rechner.

2. Verfahren nach Anspruch 1, **dadurch gekennzeichnet**, daß der zu untersuchende Bereich die gehärtete Anströmkante einer Turnbinenschaufel, insbesondere einer Niederdruckturbinenschaufel, ist.

3. Verfahren nach Anspruch 1 oder 2, **dadurch gekennzeichnet**, daß ein Erreger- und Meßaufnehmersystem (2, 3, 4, 5) mit definierter Geschwindigkeit auf einer definierten Meßspur in dem zu untersuchenden Bereich geführt wird, wodurch sich die örtliche Zuordnung der Meßwerte aus deren zeitlicher Reihenfolge ergibt.

4. Vorrichtung zur Durchführung des Verfahrens nach Anspruch 1, 2 oder 3, mit einem Erreger- und Meßaufnehmersystem (2, 3, 5) zur Messung der Amplitude des magnetischen Barkhausenrauschens (Mₘₐₓ) und der Koerzitivfeldstärke (H_{c}), **gekennzeichnet durch** folgende Merkmale:
a) Die Vorrichtung weist eine Auswerteelektronik (12) auf, welche die Meßwerte der Koerzitivfeldstärke (H_{c}) und der Amplitude des magnetischen Barkhausenrauschens (Mₘₐₓ) parallel verarbeitet,
b) Die Auswerteelektronik 12 weist einen oder mehrere Speicher (13) mit Kalibrierdaten oder Kalibrierfunktionen für einen oder mehrere Werkstoffe auf bezüglich Abhängigkeiten zwischen Barkhausenrauschamplitude (Mₘₐₓ), Koerzitivfeldstärke (H_{c}), Härte (HV) und mechanischer Spannung (Sigma),
c) Die Auswerteelektronik (12) weist eine Umrechnungsstufe (14) auf, welche die Meßwerte (Mₘₐₓ, H_{c}) anhand der gespeicherten Kalibrierdaten in die Materialeigenschaften Härte (HV) und Spannung (Sigma) umrechnet.

5. Vorrichtung nach Anspruch 4, **dadurch gekennzeichnet**, daß das Erreger- und Meßaufnehmersystem (2, 3, 5) entlang einer definierten Meßspur mit definierter Geschwindigkeit in dem zu untersuchenden Bereich eines Bauteils, insbesondere einer Turbinenschaufel verfahrbar ist.

6. Vorrichtung nach Anspruch 5, **dadurch gekennzeichnet**, daß das magnetische Erregersystem (2, 3) gleichzeitig als magnetische Halterung des Meßaufnehmersystems (5) am zu untersuchenden Bauteil (1) ausgebildet ist.

7. Vorrichtung nach Anspruch 6, **dadurch gekennzeichnet**, daß das magnetische Erregersystem (2, 3) ein Magnetjoch (2) ist, zwischen dessen beiden Magnetpolen das Meßaufnehmersystem (5) verfahrbar ist.

## Claims

1. Process for determining internal stresses in a hardened region to be tested of a component made of a predetermined material, in particular in a turbine blade, characterised by the following features:
a) the coercive field strength (H_{c}) and the amplitude of the magnetic Barkhausen noise (Mₘₐₓ) are measured as a function of the mechanical stress (Sigma) and hardness (HV) in calibration samples of the predetermined material, e.g. X20Cr13 or X10CrNiMo V12 22, of respectively known hardness and known internal stress,
b) calibration functions are ascertained from these first measured values, these functions indicating the dependency of the coercive field strength (H_{c}) and the amplitude of the magnetic Barkhausen noise (Mₘₐₓ) as functions of hardness (HV) and mechanical stress (Sigma)
c) the coercive field strengths (H_{c}) and the amplitude of the magnetic Barkhausen noise (Mₘₐₓ) are measured in a location-dependent manner over the region of the component to be tested
d) these second measured values (H_{c}, Mₘₐₓ) of the coercive field strength and the amplitude of the magnetic Barkhausen noise in the region to be tested are converted by means of the ascertained calibration functions into location-dependent hardness (HV), e.g. Vickers hardness, and into location-dependent mechanical stress (Sigma), the location-dependent mechanical stress (Sigma) thus obtained being considered independently of the location-dependent hardness (HV) in the region to be tested, and being suitable for further processing, in particular for a visual representation of the stress distribution or further processing in a computer.

2. Process according to claim 1, characterised in that the region to be tested is the hardened leading edge of a turbine blade, in particular a low-pressure turbine blade.

3. Process according to claim 1 or 2, characterised in that an exciter and measurement-pick-up system (2, 3, 4, 5) is guided at a predetermined speed on a defined measurement track in the region to be tested, and hence the local arrrangement of the measured values is obtained from their chronological succession.

4. Device for carrying out the process according to claim 1, 2 or 3, having an exciter and measurement pick-up system (2, 3, 5) for measuring the amplitude of the magnetic Barkhausen noise (Mₘₐₓ) and the coercive field strength (H_{c}), characterised by the following features:
a) the device has an electronic evaluation device (12) which processes the measured values of the coercive field strength (H_{c}) and the amplitude of the magnetic Barkhausen noise (Mₘₐₓ) in parallel
b) the electronic evaluation device 12 has one or several memories (13) having calibration data or calibration functions for one or several materials relating to dependencies between Barkhausen noise amplitude (Mₘₐₓ), coercive field strength (H_{c}), hardness (HV) and mechanical stress (Sigma)
c) the electronic evaluation device (12) has a conversion stage (14) which converts the measured values (Mₘₐₓ, H_{c}) by means of the stored calibration data into the material properties of hardness (HV) and stress (Sigma).

5. Device according to claim 4, characterised in that the exciter and measurement pick-up system (2, 3, 5) can be moved along a defined measurement track at a defined speed in the region to be tested of a component, in particular a turbine blade.

6. Device according to claim 5, characterised in that the magnetic exciter system (2, 3) is constructed at the same time as a magnetic holder of the measurement pick-up system (5) on the component (1) to be tested.

7. Device according to claim 6, characterised in that the magnetic exciter system (2, 3) is a magnet yoke between whose magnetic poles the measurement pick-up system (5) can be moved.

## Revendications

1. Procédé pour déterminer des contraintes propres dans une zone trempée, devant être examinée, d'un composant réalisé en un matériau prédéterminé, notamment dans le cas d'une aube de turbine, caractérisé par les particularités suivantes :
a) sur des échantillons d'étalonnage du matériau prédéterminé, par exemple X20Cr13 ou X10CrNiMo V12 22, possédant respectivement une dureté connue et une contrainte propre connue, on mesure l'intensité du champ coercitif (H_{c}) et l'amplitude du bruit magnétique de Barkhausen (Mₘₐₓ) en fonction de la contrainte mécanique (sigma) et de la dureté (HV),
b) à partir de ces premières valeurs, on établit des fonctions d'étalonnage, qui indiquent la dépendance de l'intensité du champ coercitif (H_{c}) et de l'amplitude du bruit magnétique de Barkhausen (Mₘₐₓ) vis-à-vis de la dureté (HV) et de la contrainte mécanique (sigma),
c) dans la zone à examiner du composant, on mesure, en fonction de l'emplacement, les intensités du champ coercitif (H_{c}) et l'amplitude du bruit magnétique de Barkhausen (Mₘₐₓ),
d) on convertit ces deux valeurs de mesure (H_{c}, Mₘₐₓ) de l'intensité du champ coercitif et de l'amplitude du bruit magnétique de Barkhausen dans la zone à examiner, en référence aux fonctions déterminées d'étalonnage, en une dureté (HV) qui dépend du lieu, par exemple la dureté selon Vickers, en une contrainte mécanique (sigma) qui dépend du lieu, la tension mécanique (sigma) qui dépend du lieu, ainsi obtenue, étant présente indépendamment de la dureté (HV), qui dépend du lieu, dans la zone à examiner et étant disponible pour un traitement ultérieur, notamment pour une représentation, sous la forme d'une image, de la distribution des contraintes ou pour un traitement ultérieur dans un calculateur.

2. Procédé suivant la revendication 1, caractérisé par le fait que la zone à examiner est le bord d'attaque trempé d'une aube de turbine, notamment d'une aube de turbine basse pression.

3. Procédé suivant la revendication 1 ou 2, caractérisé par le fait qu'on déplace un système d'excitation et d'enregistrement de mesure (2,3,4,5) à une vitesse définie sur une piste de mesure définie, dans la zone à examiner, ce qui permet d'obtenir l'association locale des valeurs de mesure à partir de leur succession dans le temps.

4. Dispositif pour la mise en oeuvre du procédé suivant la revendication 1, 2 ou 3, comportant un système d'excitation et d'enregistrement de mesure (2,3,5) servant à mesurer l'amplitude du bruit magnétique de Barkhausen (Mₘₐₓ) et de l'intensité du champ coercitif (H_{c}), caractérisé par les particularités suivantes :
a) le dispositif comporte un système électronique de mesure ou d'évaluation (12), qui traite en parallèle les valeurs de mesure de l'intensité du champ coercitif (H_{c}) et de l'amplitude du bruit magnétique de Barkhausen (Mₘₐₓ),
b) le système électronique de mesure (12) possède une ou plusieurs mémoires (13) comportant des données d'étalonnage ou des fonctions d'étalonnage pour un ou plusieurs matériaux, en ce qui concerne des dépendances entre l'amplitude du bruit de Barkhausen (Mₘₐₓ), l'intensité du champ coercitif (H_{c}), la durée (HV) et la contrainte mécanique (sigma),
c) le système électronique d'évaluation (12) possède un étage de conversion (14), qui, sur la base des données mémorisées d'étalonnage, convertit les valeurs de mesure (Mₘₐₓ, H_{c}) en les caractéristiques du matériau dureté (HV) et contrainte (sigma).

5. Dispositif suivant la revendication 4, caractérisé par le fait que le système d'excitation et d'enregistrement de mesure (2,3,5) est déplaçable le long d'une piste de mesure définie avec une vitesse définie dans la zone à examiner d'un composant, notamment d'une aube de turbine.

6. Dispositif suivant la revendication 5, caractérisé par le fait que le système d'excitation magnétique (2,3) est réalisé simultanément sous la forme d'un dispositif de retenue magnétique du système d'enregistrement de mesure (5) sur le composant à examiner (1).

7. Dispositif suivant la revendication 6, caractérisé par le fait que le système d'excitation magnétique (2,3) est une culasse magnétique (2), entre les deux pôles magnétiques duquel le système d'enregistrement de mesure (5) est déplaçable.
